# EUROPÄISCHE PATENTSCHRIFT

(11) **EP 3 403 745 B1**
(45) Veröffentlichungstag und Bekanntmachung des Hinweises auf die Patenterteilung: **09.09.2020**
(21) Anmeldenummer: 18170298.6
(22) Anmeldetag: 02.05.2018
(51) Int. Cl.: B22F 3/105, B23K 26/03, B33Y 30/00, B23K 26/342, B23K 26/70, B23K 31/12, B23K 26/60, B33Y 10/00, B33Y 40/00, B23K 103/18

(54) **SCHICHTBAUVERFAHREN UND SCHICHTBAUVORRICHTUNG ZUM ADDITIVEN HERSTELLEN ZUMINDEST EINES BAUTEILBEREICHS EINES BAUTEILS**
LAYERED CONSTRUCTION DEVICE AND LAYERED CONSTRUCTION METHOD FOR ADDITIVE MANUFACTURE OF AT LEAST ONE COMPONENT AREA OF A COMPONENT
DISPOSITIF DE FABRICATION EN COUCHE ET PROCÉDÉ DE FABRICATION EN COUCHE DESTINÉS À LA FABRICATION ADDITIVE D'AU MOINS UNE ZONE DE COMPOSANT D'UN COMPOSANT

(30) Priorität: 15.05.2017 DE 102017208092
(43) Veröffentlichungstag der Anmeldung: 21.11.2018
(73) Patentinhaber: MTU Aero Engines AG, 80995 München (DE)
(72) Erfinder: Casper, Johannes, 85737 München (DE); Bamberg, Joachim, 85221 Dachau (DE); Hanrieder, Herbert, 85411 Hohenkammer (DE); Zenzinger, Günter, 83666 Waakirchen (DE)

(56) Entgegenhaltungen:
- EP-A1- 2 789 413
- EP-A1- 3 312 009
- EP-A2- 1 659 396
- WO-A1-2015/169309
- DE-B3-102014 212 246

## Beschreibung

Die Erfindung betrifft ein Schichtbauverfahren und eine Schichtbauvorrichtung zum additiven Herstellen zumindest eines Bauteilbereichs eines Bauteils.

Additive Schichtbauverfahren bezeichnen Prozesse, bei denen anhand eines virtuellen Modells eines herzustellenden Bauteils oder Bauteilbereichs Geometriedaten ermittelt werden, welche in Schichtdaten zerlegt werden (sog. "slicen"). Abhängig von der Geometrie des Modells wird eine Belichtungsstrategie bestimmt, gemäß welcher die selektive Verfestigung eines Werkstoffs erfolgen soll. Neben der Anzahl und Anordnung von Belichtungsvektoren, zum Beispiel Streifenbelichtung, Islandstragie etc., umfasst die Belichtungsstrategie weitere Prozessparameter wie beispielsweise die Leistung eines zum Verfestigen zu verwendenden Hochenergiestrahls. Gemäß der Belichtungsstrategie wird dann der gewünschte Werkstoff schichtweise abgelagert und selektiv mittels wenigstens eines Hochenergiestrahls verfestigt, um den Bauteilbereich additiv aufzubauen. Damit unterscheiden sich additive bzw. generative Herstellungsverfahren von konventionellen abtragenden oder urformenden Fertigungsmethoden. Beispiele für additive Herstellungsverfahren sind generative Lasersinter- bzw. Laserschmelzverfahren, die zur Herstellung von Bauteilen für Strömungsmaschinen wie Flugtriebwerke verwendet werden können. Beim selektiven Laserschmelzen werden dünne Pulverschichten des oder der verwendeten Werkstoffe auf eine Bauplattform aufgebracht und mit Hilfe eines oder mehrerer Laserstrahlen lokal im Bereich einer Aufbau- und Fügezone aufgeschmolzen und verfestigt. Anschließend wird die Bauplattform abgesenkt, eine weitere Pulverschicht aufgebracht und erneut lokal verfestigt. Dieser Zyklus wird solange wiederholt, bis das fertige Bauteil bzw. der fertige Bauteilbereich erhalten wird. Das Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt.

Allerdings entstehen bei der additiven Verarbeitung wie bei jedem anderen Fertigungsverfahren prozesstypische Fehler, die im Fall von additiven Schichtbauverfahren beispielsweise Risse, Bindefehler, Einschlüsse und dergleichen umfassen. Insbesondere bei der Verarbeitung von Hochtemperaturwerkstoffen wie etwa schwer-schweißbaren Nickelbasislegierungen kommt es zudem zu (Heiß-)Rissen. Diese können mit heutigen Prozessüberwachungsmitteln aber in der Regel nicht zuverlässig detektiert werden, da additiv hergestellte Bauteile bzw. Bauteilbereiche üblicherweise komplexe Geometrien mit stark gekrümmten Bauteiloberflächenbereichen aufweisen.

Verschiedene Verfahren zur Prozessführung und -überwachung von Schichtbauverfahren sind aus den Dokumenten EP 2 789 413 A1, DE 10 2014 212246 B3, EP 1 6590 396 A2, WO 2015/169309 A1 und EP 3 312 009 A1 bekannt.

Aufgabe der vorliegenden Erfindung ist es, ein additives Schichtbauverfahren zu schaffen, welches eine verbesserte Prozessüberwachung ermöglicht. Eine weitere Aufgabe der Erfindung besteht darin, eine Schichtbauvorrichtung bereitzustellen, welche die additive Herstellung von Bauteilen bzw. Bauteilbereichen mit verbesserter Prozessüberwachung ermöglicht.

Die Aufgaben werden erfindungsgemäß durch ein Schichtbauverfahren mit den Merkmalen des Patentanspruchs 1 sowie durch eine Schichtbauvorrichtung mit den Merkmalen des Patentanspruchs 10 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Schichtbauverfahrens als vorteilhafte Ausgestaltungen der Schichtbauvorrichtung und umgekehrt anzusehen sind.

Ein erster Aspekt der Erfindung betrifft ein Schichtbauverfahren zur additiven Herstellung zumindest eines Bauteilbereichs eines Bauteils, bei welchem zumindest die Schritte a) Auftragen von mindestens einer Pulverschicht eines metallischen und/oder intermetallischen Werkstoffs auf mindestens eine Aufbau- und Fügezone mindestens einer absenkbaren Bauplattform, b) Schichtweises und lokales Verschmelzen und/oder Versintern des Werkstoffs zum Ausbilden einer Bauteilschicht durch selektives Belichten des Werkstoffs mit wenigstens einem Hochenergiestrahl gemäß einer vorbestimmten Belichtungsstrategie, c) Schichtweises Absenken der Bauplattform um eine vordefinierte Schichtdicke und d) Wiederholen der Schritte a) bis d) bis zur Fertigstellung des Bauteilbereichs durchgeführt werden. Eine verbesserte Prozessüberwachung wird dadurch ermöglicht, dass während der Herstellung des Bauteilbereichs wenigstens eine Bauteilschicht durch Erzeugen von Wirbelströmen in der Bauteilschicht erwärmt wird, mindestens ein Bild der Bauteilschicht mittels eines Kamerasystems akquiriert wird, wobei das Bild eine Temperaturverteilung der Bauteilschicht charakterisiert, und mittels einer Recheneinrichtung anhand des mindestens einen akquirierten Bilds auf das Vorhandensein wenigstens eines oberflächennahen Fehlers aus der Gruppe Risse, Bindefehler, Einschlüsse und andere Fehlstellen in der Bauteilschicht geprüft wird. Indem ein Wirbelstrom in die Bauteilschicht bzw. in das bereits aufgebaute Halbzeug induziert wird, erwärmt sich dieses. Erfindungsgemäß ist vorgesehen, dass die wenigstens eine Bauteilschicht erwärmt wird, indem wenigstens eine Induktionsspule mit elektrischem Strom beaufschlagt und relativ zur Bauteilschicht bewegt wird. Hierdurch können Wirbelströme besonders einfach und flexibel induziert werden. Die mittlere relative Geschwindigkeit zwischen der Induktionsspule und der Bauteilschicht kann dabei beispielsweise zwischen 1 mm/s und 250 mm/s betragen, also beispielsweise 1 mm/s, 5 mm/s, 10 mm/s, 15 mm/s, 20 mm/s, 25 mm/s, 30 mm/s, 35 mm/s, 40 mm/s, 45 mm/s, 50 mm/s, 55 mm/s, 60 mm/s, 65 mm/s, 70 mm/s, 75 mm/s, 80 mm/s, 85 mm/s, 90 mm/s, 95 mm/s, 100 mm/s, 105 mm/s, 110 mm/s, 115 mm/s, 120 mm/s, 125 mm/s, 130 mm/s, 135 mm/s, 140 mm/s, 145 mm/s, 150 mm/s, 155 mm/s, 160 mm/s, 165 mm/s, 170 mm/s, 175 mm/s, 180 mm/s, 185 mm/s, 190 mm/s, 195 mm/s, 200 mm/s, 205 mm/s, 210 mm/s, 215 mm/s, 220 mm/s, 225 mm/s, 230 mm/s, 235 mm/s, 240 mm/s, 245 mm/s oder 250 mm/s, wobei entsprechende Zwischenwerte als mitoffenbart anzusehen sind. Dabei kann es grundsätzlich vorgesehen sein, dass die Induktionsspule mit einem konstanten elektrischen Strom betrieben und dabei über die Bauteilschicht bewegt wird, um Wirbelströme zu induzieren. Dies ist insbesondere für lange Bauteilbereiche von Vorteil. Alternativ kann die Induktionsspule mit einem zeitlich veränderten elektrischen Strom betrieben werden und relativ zur Bauteilschicht bewegt werden, um Wirbelströme in dieser zu induzieren. Dies ist insbesondere für kurze Bauteilbereiche von Vorteil. Dabei sollte entweder über die Wahl der Geschwindigkeit und/oder über die Bestromung der Induktionsspule generell eine relative kurzzeitige Einwirkung des Magnetfelds angestrebt werden, um zu vermeiden, dass die daraus resultierende Temperaturerhöhung aufgrund der Wärmeleitung im Halbzeug zu stark abgeschwächt bzw. nivelliert wird, wodurch die Detektierbarkeit etwaiger Fehler leiden würde. Da Schichtbauvorrichtungen häufig ohnehin induktive Heizeinrichtungen umfassen, können eine oder mehrere bereits vorhandene Induktionsspulen vorteilhaft zur Erzeugung von Wirbelströmen im Rahmen der Fehlerprüfung verwendet werden, wodurch entsprechende Kostensenkungen realisiert werden. Die Erwärmung wird durch Akquirieren eines oder mehrerer Bilder erfasst. Dabei zeigen oberflächennahe Fehlertypen wie Risse, Bindefehler, Einschlüsse und andere Fehlstellen in der Bauteilschicht bzw. in dem bisher bereits aufgebauten Halbzeug eine charakteristische Signatur, da sie die Temperaturentwicklung im Halbzeug beeinflussen und daher bei der folgenden Prüfung auf Fehler zuverlässig erkannt werden können. Beispielsweise werden die Stromlinien des erzeugten Wirbelstroms, die in einem homogenen Material normalerweise konzentrisch verlaufen, im Falle eines Risses um den Riss herum geleitet.

Dadurch erhöht sich die Stromdichte an der Rissspitze, was wiederum zu einer lokalen Temperaturerhöhung führt, die im akquirierten Bild erfasst wird. Entsprechendes gilt für andere Inhomogenitäten und Fehlertypen. Die Prüfung auf Fehler muss zudem nicht wie bisher im Anschluss an die Herstellung des Bauteils bzw. Bauteilbereich erfolgen, sondern wird ein- oder mehrmals, beispielsweise für mehrere oder jede hergestellte Bauteilschicht während des additiven Herstellungsprozesses durchgeführt, so dass im Falle eines Fehlers sofort reagiert werden kann und nicht erst bis zum Abschluss des Herstellungsprozesses gewartet werden muss. Die Prüfung auf Fehler kann dabei grundsätzlich im Anschluss an die Fertigstellung einer Bauteilschicht, aber auch während der Herstellung einer Bauteilschicht erfolgen. Im letzteren Fall wird ein erster Bereich der Pulverschicht lokal zu einer Bauteilschicht des herzustellenden Bauteilbereichs verfestigt, während gleichzeitig wenigstens ein zweiter Bereich des in der Herstellung begriffenen Bauteilbereichs in der vorstehend beschriebenen Weise durch Induktion von Wirbelströmen und Auswertung eines akquirierten Bildes auf das Vorhandensein von Fehlern geprüft wird. Weitere Vorteile liegen in der kurzen Inspektionszeit, in der berührungslosen Fehlerprüfung und in der hohen Nachweisempfindlichkeit, da auch Fehlerstellen unter der Oberfläche bzw. in tiefer liegenden Bauteilschichten sowie in Bereichen, die mit Hilfe von anderen Sensoren oder Prüfverfahren aufgrund geometrischer Einschränkung nicht zugänglich sind, detektiert werden können. Weiterhin ist die erfindungsgemäße Prüfung auf Fehler besonders unempfindlich gegenüber Strahlungs- oder Emissionsunterschieden auf der Prüfoberfläche, da die Wärme direkt im Halbzeug entsteht.

In einer weiteren Ausgestaltung kann es vorgesehen sein, dass wenigstens eine Induktionsspule in Abhängigkeit einer Bauteilgeometrie positioniert wird. Dies erlaubt eine verbesserte Auffindbarkeit etwaiger Fehler.

Weitere Vorteile ergeben sich, indem wenigstens eine weitere Induktionsspule mit elektrischem Strom beaufschlagt und relativ zur Bauteilschicht und/oder relativ zur Induktionsspule bewegt wird. Beispielsweise kann hierzu eine Heizeinrichtung mit einer sogenannten Kreuzspulenanordnung verwendet werden, bei welcher zwei oder mehr Induktionsspulen zur gezielten Überlagerung oder Abschwächung ihrer Felder relativ zueinander bewegbar sind. Alternativ oder zusätzlich kann vorgesehen sein, dass mittels der wenigstens einen Induktionsspule der pulverförmige Werkstoff vor, während und/oder nach Schritt b) erwärmt wird. Damit kann neben einer Vorwärmung des Werkstoffs für einen nachfolgenden Schichtaufbau auch der Kontrast zur zu erwärmenden Bauteilschicht für die Akquirierung des Bilds eingestellt werden.

Weitere Vorteile die wenigstens eine Bauteilschicht erwärmt wird, indem ein gepulstes Hochfrequenzmagnetfeld für eine vorbestimmte Zeitdauer eingekoppelt wird. Hierdurch können das zu erzeugende Temperatursignal und die darauf basierende Fehlerprüfung besonders einfach an unterschiedliche Bauteilgeometrien, Werkstoffe und Tiefenbereiche für den Fehlernachweis angepasst werden.

Dabei hat es sich als vorteilhaft gezeigt, wenn eine Pulsdauer des Hochfrequenzmagnetfelds und/oder die vorbestimmte Zeitdauer zwischen 50 ms und 2 s, also beispielsweise 50 ms, 100 ms, 150 ms, 200 ms, 250 ms, 300 ms, 350 ms, 400 ms, 450 ms, 500 ms, 550 ms, 600 ms, 650 ms, 700 ms, 750 ms, 800 ms, 850 ms, 900 ms, 950 ms, 1000 ms, 1050 ms, 1100 ms, 1150 ms, 1200 ms, 1250 ms, 1300 ms, 1350 ms, 1400 ms, 1450 ms, 1500 ms, 1550 ms, 1600 ms, 1650 ms, 1700 ms, 1750 ms, 1800 ms, 1850 ms, 1900 ms, 1950 ms oder 2000 ms beträgt. Auf diese Weise kann in Abhängigkeit der jeweiligen Gegebenheiten zuverlässig sichergestellt werden, dass die Wärmeleitung im Halbzeug für die Prüfung auf Fehler vernachlässigbar ist. Alternativ oder zusätzlich ist es vorgesehen, dass das Hochfrequenzmagnetfeld mehrfach für eine jeweils vorbestimmte Zeitdauer eingekoppelt wird. Hierdurch kann das Signal-Rausch-Verhältnis verbessert werden, was eine entsprechend zuverlässigere Fehlerprüfung ermöglicht.

Eine besonders zuverlässige Erwärmung und damit eine entsprechend besonders zuverlässige Prüfung auf Fehler wird in weiterer Ausgestaltung der Erfindung dadurch sichergestellt, dass das Hochfrequenzmagnetfeld mittels eines Hochfrequenz-Generators erzeugt wird, wobei der Hochfrequenz-Generator mit einer Frequenz zwischen 1 kHz und 1000 kHz, also beispielsweise mit 1 kHz, 2 kHz, 3 kHz, 4 kHz, 5 kHz, 6 kHz, 7 kHz, 8 kHz, 9 kHz, 10 kHz, 20 kHz, 30 kHz, 40 kHz, 50 kHz, 60 kHz, 70 kHz, 80 kHz, 90 kHz, 100 kHz, 100 kHz, 150 kHz, 200 kHz, 250 kHz, 300 kHz, 350 kHz, 400 kHz, 450 kHz, 500 kHz, 550 kHz, 600 kHz, 650 kHz, 700 kHz, 750 kHz, 800 kHz, 850 kHz, 900 kHz, 950 kHz oder 1000 kHz betrieben wird. Alternativ oder zusätzlich kann es vorgesehen sein, dass der Hochfrequenz-Generator mit einer Leistung von mindestens 0,1 kW, also beispielsweise mit 0,1 kW, 0,2 kW, 0,3 kW, 0,4 kW, 0,5 kW, 0,6 kW, 0,7 kW, 0,8 kW, 0,9 kW, 1,0 kW 1,5 kW, 2,0 kW, 2,5 kW, 3,0 kW, 3,5 kW, 4,0 kW, 4,5 kW, 5,0 kW, 5,5 kW, 6,0 kW, 6,5 kW, 7,0 kW, 7,5 kW, 8,0 kW, 8,5 kW, 9,0 kW, 9,5 kW, 10,0 kW oder mehr betrieben wird.

Weitere Vorteile ergeben sich, indem die wenigstens eine Bauteilschicht während und/oder nach Schritt b) durch Erzeugen von Wirbelströmen erwärmt wird. Mit anderen Worten kann das erfindungsgemäße Fehlerprüfverfahren generell während eines Verfestigungsschrittes und/oder nach einem Verfestigungsschritt durchgeführt werden, wodurch eine besonders flexible Prüfung ermöglicht ist.

In einer weiteren vorteilhaften Ausgestaltung der Erfindung ist vorgesehen, dass die Recheneinrichtung beim Prüfen auf Fehler das wenigstens eine akquirierte Bild mit einem Referenzbild vergleicht und/oder anhand des akquirierten Bilds eine Bauteilschichtkontur ermittelt und/oder Randbereiche der Bauteilschicht bei der Prüfung auf Fehler berücksichtigt. Dies erlaubt eine besonders zuverlässige und automatisierte Auswertung des akquirierten Bilds.

Weitere Vorteile ergeben sich dadurch, dass nacheinander mehrere Bilder der erwärmten Bauteilschicht mittels des Kamerasystems akquiriert werden, wobei die Bilder eine zeitliche Entwicklung der Temperaturverteilung der Bauteilschicht charakterisieren, und dass mittels der Recheneinrichtung anhand der mehreren akquirierten Bilder auf das Vorhandensein und/oder auf die Beschaffenheit wenigstens eines Fehlers geprüft wird. Auf diese Weise kann durch eine Art Reihenfotografie eine besonders genaue und reproduzierbare Prüfung auf Fehler durchgeführt werden, da der zeitliche Verlauf der Wärmeverteilung in der Bauteilschicht bzw. im Halbzeug über einen vorbestimmten Zeitraum bzw. in vorbestimmten Abständen berücksichtigt werden kann.

In einer weiteren vorteilhaften Ausgestaltung der Erfindung ist vorgesehen, dass mittels der Recheneinrichtung in Abhängigkeit der Prüfung auf Fehler die Belichtungsstrategie für eine erneute Belichtung der Bauteilschicht und/oder für wenigstens eine folgende Bauteilschicht bestimmt und/oder angepasst wird. Auf diese Weise können in der Bauteilschicht erkannte Fehler je nach Art und Umfang unmittelbar repariert werden, indem die Bauteilschicht erneut mit einer entsprechend angepassten Belichtungsstrategie (nach)belichtet wird und/oder indem die Belichtungsstrategie einer oder mehrerer nachfolgender Bauteilschichten verändert bzw. angepasst wird. Hierdurch kann die Ausschussquote des Schichtbauverfahrens erheblich reduziert werden, wodurch entsprechende Zeit- und Kostenvorteile realisiert werden.

Ein zweiter Aspekt der Erfindung betrifft eine Schichtbauvorrichtung zur additiven Herstellung zumindest eines Bauteilbereichs eines Bauteils durch ein additives Schichtbauverfahren, welche mindestens eine Pulverzuführung zum Auftrag von mindestens einer Pulverschicht eines Werkstoffs auf eine Aufbau- und Fügezone einer bewegbaren Bauplattform und mindestens eine Strahlungsquelle zum Erzeugen wenigstens eines Hochenergiestrahls zum schichtweisen und lokalen Verschmelzen und/oder Versintern des Werkstoffs zum Ausbilden einer Bauteilschicht durch selektives Belichten des Werkstoffs mit dem wenigstens einem Hochenergiestrahl gemäß einer vorbestimmten Belichtungsstrategie umfasst. Es ist vorgesehen, dass die Schichtbauvorrichtung zusätzlich mindestens eine Heizeinrichtung umfasst, welche dazu ausgebildet ist, wenigstens eine Bauteilschicht durch Erzeugen von Wirbelströmen in der Bauteilschicht zu erwärmen. Weiterhin umfasst die erfindungsgemäße Schichtbauvorrichtung ein Kamerasystem, welches dazu ausgebildet ist, mindestens ein Bild der erwärmten Bauteilschicht zu akquirieren, wobei das Bild eine Temperaturverteilung der Bauteilschicht charakterisiert, und mindestens eine Recheneinrichtung, welche dazu ausgebildet ist, anhand des akquirierten Bilds auf das Vorhandensein wenigstens eines oberflächennahen Fehlers aus der Gruppe Risse, Bindefehler, Einschlüsse und andere Fehlstellen in der Bauteilschicht zu prüfen. Erfindungsgemäß ist vorgesehen, dass die wenigstens eine Bauteilschicht erwärmbar ist, indem wenigstens eine Induktionsspule mit elektrischem Strom beaufschlagbar und relativ zur Bauteilschicht bewegbar ist. Hierdurch können Wirbelströme besonders einfach und flexibel induziert werden. Die mittlere relative Geschwindigkeit zwischen der Induktionsspule und der Bauteilschicht kann dabei beispielsweise zwischen 1 mm/s und 250 mm/s betragen, also beispielsweise 1 mm/s, 5 mm/s, 10 mm/s, 15 mm/s, 20 mm/s, 25 mm/s, 30 mm/s, 35 mm/s, 40 mm/s, 45 mm/s, 50 mm/s, 55 mm/s, 60 mm/s, 65 mm/s, 70 mm/s, 75 mm/s, 80 mm/s, 85 mm/s, 90 mm/s, 95 mm/s, 100 mm/s, 105 mm/s, 110 mm/s, 115 mm/s, 120 mm/s, 125 mm/s, 130 mm/s, 135 mm/s, 140 mm/s, 145 mm/s, 150 mm/s, 155 mm/s, 160 mm/s, 165 mm/s, 170 mm/s, 175 mm/s, 180 mm/s, 185 mm/s, 190 mm/s, 195 mm/s, 200 mm/s, 205 mm/s, 210 mm/s, 215 mm/s, 220 mm/s, 225 mm/s, 230 mm/s, 235 mm/s, 240 mm/s, 245 mm/s oder 250 mm/s, wobei entsprechende Zwischenwerte als mitoffenbart anzusehen sind. Dabei kann es grundsätzlich vorgesehen sein, dass die Induktionsspule mit einem konstanten elektrischen Strom betrieben und dabei über die Bauteilschicht bewegt wird, um Wirbelströme zu induzieren. Dies ist insbesondere für lange Bauteilbereiche von Vorteil. Alternativ kann die Induktionsspule mit einem zeitlich veränderten elektrischen Strom betrieben werden und relativ zur Bauteilschicht bewegt werden, um Wirbelströme in dieser zu induzieren. Dies ist insbesondere für kurze Bauteilbereiche von Vorteil. Dabei sollte entweder über die Wahl der Geschwindigkeit und/oder über die Bestromung der Induktionsspule generell eine relative kurzzeitige Einwirkung des Magnetfelds angestrebt werden, um zu vermeiden, dass die daraus resultierende Temperaturerhöhung aufgrund der Wärmeleitung im Halbzeug zu stark abgeschwächt bzw. nivelliert wird, wodurch die Detektierbarkeit etwaiger Fehler leiden würde. Da Schichtbauvorrichtungen häufig ohnehin induktive Heizeinrichtungen umfassen, können eine oder mehrere bereits vorhandene Induktionsspulen vorteilhaft zur Erzeugung von Wirbelströmen im Rahmen der Fehlerprüfung verwendet werden, wodurch entsprechende Kostensenkungen realisiert werden. Hierdurch ermöglicht die Schichtbauvorrichtung eine verbesserte Prozessüberwachung, da während der Herstellung des Bauteilbereichs wenigstens eine Bauteilschicht durch Erzeugen von Wirbelströmen in der Bauteilschicht erwärmt und mindestens ein Bild der Bauteilschicht mittels eines Kamerasystems akquiriert werden kann, wobei das Bild eine Temperaturverteilung der Bauteilschicht charakterisiert. Mittels der Recheneinrichtung kann dann anhand des mindestens einen akquirierten Bilds auf das Vorhandensein wenigstens eines Fehlers geprüft werden. Indem ein Wirbelstrom in die Bauteilschicht bzw. in das bereits aufgebaute Halbzeug induziert wird, erwärmt sich dieses. Die Erwärmung kann dann durch Akquirieren eines oder mehrerer Bilder erfasst. Dabei zeigen oberflächennahe Fehlertypen wie Risse, Bindefehler, Einschlüsse und andere Fehlstellen in der Bauteilschicht bzw. in dem bisher bereits aufgebauten Halbzeug eine charakteristische Signatur, da sie die Temperaturentwicklung im Halbzeug beeinflussen und daher bei der folgenden Prüfung auf Fehler zuverlässig erkannt werden können. Beispielsweise werden die Stromlinien des erzeugten Wirbelstroms, die in einem homogenen Material normalerweise konzentrisch verlaufen, im Falle eines Risses um den Riss herum geleitet. Dadurch erhöht sich die Stromdichte an der Rissspitze, was wiederum zu einer lokalen Temperaturerhöhung führt, die im akquirierten Bild erfasst werden kann. Entsprechendes gilt für andere Inhomogenitäten und Fehlertypen. Die Prüfung auf Fehler muss zudem nicht wie bisher im Anschluss an die Herstellung des Bauteils bzw. Bauteilbereich erfolgen, sondern kann ein- oder mehrmals, beispielsweise für mehrere oder jede hergestellte Bauteilschicht während des additiven Herstellungsprozesses durchgeführt werden, so dass im Falle eines Fehlers sofort reagiert werden kann und nicht erst bis zum Abschluss des Herstellungsprozesses gewartet werden muss. Weitere Vorteile liegen in der kurzen Inspektionszeit, in der berührungslosen Fehlerprüfung und in der hohen Nachweisempfindlichkeit, da auch Fehlerstellen unter der Oberfläche bzw. in tiefer liegenden Bauteilschichten sowie in Bereichen, die mit Hilfe von anderen Sensoren oder Prüfverfahren aufgrund geometrischer Einschränkung nicht zugänglich sind, detektiert werden können. Weiterhin ist die Prüfung auf Fehler besonders unempfindlich gegenüber Strahlungs- oder Emissionsunterschieden auf der Prüfoberfläche, da die Wärme direkt im Halbzeug entsteht. Im Rahmen der vorliegenden Erfindung ist der Ausdruck "ausgebildet zu" so zu verstehen, dass die betreffende Einrichtung nicht nur eine allgemeine Eignung besitzt, sondern konkret hard- und/oder softwarebasiert zur Durchführung der jeweils genannten Schritte eingerichtet und konfiguriert ist. Die Schichtbauvorrichtung kann auch eine grundsätzlich optionale Steuervorrichtung umfassen. Die Steuervorrichtung kann eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Der mit dem Programmcode versehene Datenspeicher kann dabei auch als eigenständiger Erfindungsaspekt angesehen werden.

In einer vorteilhaften Ausgestaltung der Erfindung ist es vorgesehen, dass die Schichtbauvorrichtung eine generative Lasersinter- und/oder Laserschmelzeinrichtung umfasst, mittels welcher die wenigstens eine Bauteilschicht herstellbar ist. Hierdurch können Teilbereiche hergestellt werden, deren mechanischen Eigenschaften zumindest im Wesentlichen denen des Bauteilwerkstoffs entsprechen. Zur Erzeugung eines Laserstrahls kann beispielsweise ein CO₂-Laser, Nd:YAG-Laser, Yb-Faserlaser, Diodenlaser oder dergleichen vorgesehen sein. Ebenso kann vorgesehen sein, dass zwei oder mehr Laserstrahlen verwendet werden. In Abhängigkeit des Bauteilwerkstoffs und der Belichtungsstrategie kann es beim Belichten zu einem Aufschmelzen und/oder zu einem Versintern des Pulvers kommen, so dass im Rahmen der vorliegenden Erfindung unter dem Begriff "Verschweißen" auch "Versintern" und umgekehrt verstanden werden kann.

In einer weiteren vorteilhaften Ausgestaltung der Erfindung ist es vorgesehen, dass das Kamerasystem eine Thermografiekamera umfasst, insbesondere eine Wärmebildkamera, welche zum Akquirieren von Bilder im Wellenlängenbereich von 0,5 µm bis 10 µm, also beispielsweise von 0,5 µm, 1,0 µm, 1,5 µm, 2,0 µm, 2,5 µm, 3,0 µm, 3,5 µm, 4,0 µm, 4,5 µm, 5,0 µm, 5,5 µm, 6,0 µm, 6,5 µm, 7,0 µm, 7,5 µm, 8,0 µm, 8,5 µm, 9,0 µm, 9,5 µm oder 10,0 µm, ausgebildet ist. Dies erlaubt eine hochgenaue Erfassung der einzelnen Schichten des Bauteils bzw. Bauteilbereichs. Insbesondere die optische Tomographie (OT) ist ein leistungsfähiges, zerstörungsfreies Verfahren zur Überwachung des Schichtbauverfahrens bei der additiven Fertigung. Prozessstörungen, die sich beim Erwärmen der Bauteilschicht in Form von ungleichmäßigen oder falschen Temperaturen bzw. Temperaturverteilungen zeigen, können zuverlässig erkannt und zur Fehlerprüfung herangezogen werden. Sowohl das Kamerasystem als auch die Recheneinrichtung können daher Bestandteil eines optischen Tomographiesystems sein.

Weitere Vorteile ergeben sich, wenn die Schichtbauvorrichtung eine Heizeinrichtung mit wenigstens zwei unabhängig voneinander bewegbaren Induktionsspulen umfasst. Die mindestens zwei Induktionsspulen können grundsätzlich translatorisch und/oder rotatorisch zueinander bewegbar sein, wodurch ihre relative Positionierung zueinander besonders präzise und bedarfsgerecht eingestellt werden kann. Dies erlaubt eine entsprechend präzise Erwärmung der Bauteilschicht, indem die Magnetfelder der Induktionsspulen gezielt in gewünschten Bereichen überlagert werden können.

Weitere Vorteile ergeben sich, indem die Schichtbauvorrichtung eine Speichereinrichtung umfasst, welche wenigstens ein Referenzbild umfasst, welches zur Prüfung auf das Vorhandensein wenigstens eines Fehlers mittels der Recheneinrichtung mit dem wenigstens einen zu akquirierenden Bild zu vergleichen ist. Unter einem Referenzbild wird dabei eine Abbildung einer früheren fehlerfreien Bauteilschicht verstanden, die mit der zu prüfenden Bauteilschicht des aktuellen Bauteils korrespondiert. Dies ermöglicht eine weitgehend oder vollständig automatisierte Prüfung auf Fehler, da das oder die akquirierten Bilder mit dem oder den Referenzbildern verglichen werden können und im Fall einer unzulässigen Abweichung auf das Vorliegen eines Fehlers geschlossen werden kann.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische Schnittansicht einer erfindungsgemäßen Schichtbauvorrichtung;
- Fig. 2: eine schematische Perspektivansicht einer über einer Bauteilschicht angeordneten Induktionsspule; und
- Fig. 3: eine charakteristische Wärmesignatur einer eine Fehlersteller aufweisenden Bauteilschicht.

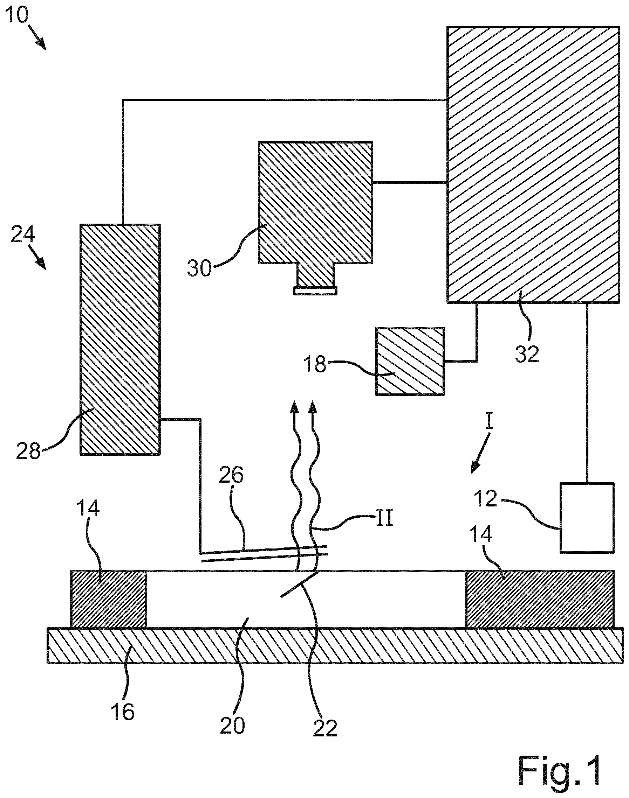

Fig. 1 zeigt eine schematische Schnittansicht einer erfindungsgemäßen Schichtbauvorrichtung 10. Die Schichtbauvorrichtung 10 umfasst eine Pulverzuführung 12 zum Auftrag von mindestens einer Pulverschicht 14 eines Werkstoffs auf eine Aufbau- und Fügezone I einer bewegbaren Bauplattform 16. Weiterhin umfasst die Schichtbauvorrichtung 10 eine generative Lasersinter- und/oder Laserschmelzeinrichtung 18 (SLM), welche mindestens eine Strahlungsquelle zum Erzeugen wenigstens eines Hochenergiestrahls aufweist, mittels welchem der Werkstoff durch selektives Belichten mit dem wenigstens einem Hochenergiestrahl gemäß einer vorbestimmten Belichtungsstrategie schichtweise und lokal zum Ausbilden einer Bauteilschicht 20 verschmolzen und/oder versintert wird.

Um eine schichtweise Prüfung des Bauteils bzw. der Bauteilschicht 20 zur Detektion von Rissen 22 und anderen prozesstypischen Fehlern zu ermöglichen, umfasst die Schichtbauvorrichtung 10 zusätzlich eine Heizeinrichtung 24, welche dazu ausgebildet ist, eine, mehrere oder alle hergestellten Bauteilschicht(en) 20 durch Erzeugen von Wirbelströmen in der Bauteilschicht 20 zu erwärmen. Hierzu umfasst die Heizeinrichtung 24 eine oder mehrere Induktionsspulen 26, die mittels eine Hochfrequenz-Generators 28 mit elektrischem Strom beaufschlagt werden, wobei der Hochfrequenz-Generator mit einer Frequenz zwischen 1 kHz und 1000 kHz und mit einer Leistung von mindestens 0,1 kW betrieben wird. Hierdurch wird ein gepulstes Hochfrequenzmagnetfeld erzeugt, welches für eine Zeitdauer zwischen 50 ms und 0,5 s in die Bauteilschicht 20 bzw. in das bereits hergestellte Bauteil eingekoppelt wird. Alternativ oder zusätzlich kann vorgesehen sein, dass eine oder mehrere Induktionsspulen 26 mit einem konstanten Strom beaufschlagt und über die Bauteilschicht(en) 20 bewegt werden, um Wirbelströme zu erzeugen. Je nach Ausgestaltung der Schichtbauvorrichtung 10 kann als Heizeinrichtung 24 ein SLM-Heizmodul verwendet werden, welches häufig zur induktiven Vorwärmung der Pulverschicht 14 ohnehin vorhanden ist. Dadurch kann vorteilhaft auf zusätzliche Hardware verzichtet werden, wodurch neben einem geringeren Platzbedarf auch entsprechende Kostensenkungen möglich sind.

Weiterhin umfasst die Schichtbauvorrichtung 10 ein Kamerasystem 30, welches dazu ausgebildet ist, mindestens ein Bild der erwärmten Bauteilschicht 20 zu akquirieren, wobei das Bild eine Temperaturverteilung der Bauteilschicht charakterisiert. Das Kamerasystem 30 umfasst hierzu eine Thermografiekamera zur Aufnahme eines Temperaturbildes (z. B. im Wellenlängenbereich von 0,5 - 10 µm) anhand der von der erwärmten Bauteilschicht 20 abgestrahlten IR-Strahlung II. Zum Akquirieren des wenigstens einen Bilds kann grundsätzlich auch eine in vielen Fällen ohnehin vorhandene optische Tomographieeinrichtung (OT-System) verwendet werden. Schließlich umfasst die Schichtbauvorrichtung 10 eine Recheneinrichtung 32, welche dazu ausgebildet ist, anhand des akquirierten Bilds auf das Vorhandensein von Fehlern 22 zu prüfen. Hierzu kann beispielsweise vorgesehen sein, dass die Recheneinrichtung 32 das wenigstens eine akquirierte Bild mit einem gespeicherten Referenzbild einer korrespondierenden fehlerfreien Bauteilschicht 20 vergleicht. Zur Verbesserung der Erkennung bei komplex geformten Geometrien können anhand des akquirierten Bilds zusätzlich eine Bauteilschichtkontur ermittelt und Randbereiche der Bauteilschicht 20 bei der Prüfung auf Fehler 22 berücksichtigt werden.

Die beschriebene Fehlerprüfung kann dabei grundsätzlich im Anschluss an die Herstellung einer, mehrerer oder aller Bauteilschichten durchgeführt werden. Alternativ oder zusätzlich kann die Fehlerprüfung auch während der Herstellung einer, mehrerer oder aller Bauteilschichten durchgeführt werden. In diesem Fall kann beispielsweise der von der Laserschmelzeinrichtung 18 erzeugte Hochenergiestrahl an der Induktionsspule 26 vorbei oder durch einen Zwischenraum der Induktionsspule 26 auf die darunter liegende Pulverschicht 14 gelenkt werden, um eine lokale Verfestigung zu erzielen. Gleichzeitig kann mit Hilfe der Induktionsspule 26 ein beabstandeter Bauteilbereich induktiv erwärmt und auf das Vorhandensein von Fehlern untersucht werden. Hierdurch können Fehler besonders schnell erkannt und gegebenenfalls sofort ausgebessert werden.

Falls die Prüfung das Vorliegen eines Fehlers 22 ergibt, kann abhängig von der Fehlercharakteristik die Bauteilschicht 20 nochmals mit einer angepassten Belichtungsstrategie belichtet werden. Alternativ oder zusätzlich kann die Belichtungsstrategie wenigstens einer nachfolgenden Bauteilschicht 20 so bestimmt oder angepasst werden, dass der Fehler 22 behoben wird. Falls der Fehler 22 als "irreparabel" klassifiziert werden muss, kann das additive Schichtbauverfahren abgebrochen werden, ohne das geplante Bauteil erst vollständig fertigstellen und anschließend verwerfen zu müssen.

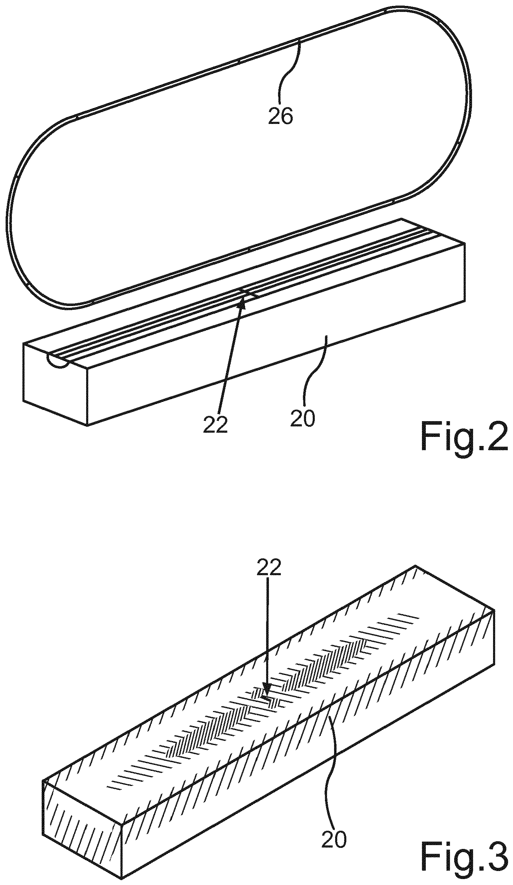

Fig. 2 zeigt zur weiteren Verdeutlichung eine schematische Perspektivansicht einer über einer Bauteilschicht 20 angeordneten Induktionsspule 26. Wie bereits erwähnt wird die Induktionsspule 26 oberhalb der Bauteilschicht 20 bzw. oberhalb des bereits hergestellten Halbzeugs angeordnet. Es wird ein konstanter Induktionsstrom erzeugt und die Induktionsspule 26 über die Bauteilschicht 20 bewegt, was zur Ausprägung typischer Wirbelströme in der Bauteilschicht 20 führt. Fehler 22 an oder dicht unterhalb der Oberfläche erzeugen typische thermische Wärmesignaturen, die in Fig. 3 dargestellt sind und mit der Thermografiekamera 30 erfasst werden können. Man erkennt in Fig. 3, dass oberflächennahe Fehler 22 wie Risse, Bindefehler, Einschlüsse und andere Fehlstellen in der Bauteilschicht 20 eine charakteristische Signatur erzeugen, da sie die Temperaturentwicklung beeinflussen. Beispielsweise werden die Stromlinien des erzeugten Wirbelstroms, die in einem homogenen Material normalerweise konzentrisch verlaufen, im Falle eines Risses 22 um den Riss 22 herum geleitet. Dadurch erhöht sich die Stromdichte an der Rissspitze, was wiederum zu einer lokalen Temperaturerhöhung führt, die in Fig. 3 erkennbar ist.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

### Bezugszeichenliste:

- 10: Schichtbauvorrichtung
- 12: Pulverzuführung
- 14: Pulverschicht
- 16: Bauplattform
- 18: Laserschmelzeinrichtung
- 20: Bauteilschicht
- 22: Fehler
- 24: Heizeinrichtung
- 26: Induktionsspule
- 28: Hochfrequenz-Generators
- 30: Kamerasystem
- 32: Recheneinrichtung
- I: Aufbau- und Fügezone
- II: IR-Strahlung

## Patentansprüche

1. Schichtbauverfahren zur additiven Herstellung zumindest eines Bauteilbereichs eines Bauteils, umfassend zumindest folgende Schritte:
a) Auftragen von mindestens einer Pulverschicht (14) eines metallischen und/oder intermetallischen Werkstoffs auf mindestens eine Aufbau- und Fügezone (I) mindestens einer absenkbaren Bauplattform (16);
b) Schichtweises und lokales Verschmelzen und/oder Versintern des Werkstoffs zum Ausbilden einer Bauteilschicht (20) durch selektives Belichten des Werkstoffs mit wenigstens einem Hochenergiestrahl gemäß einer vorbestimmten Belichtungsstrategie;
c) Schichtweises Absenken der Bauplattform (16) um eine vordefinierte Schichtdicke; und
d) Wiederholen der Schritte a) bis d) bis zur Fertigstellung des Bauteilbereichs,
wobei während der Herstellung des Bauteilbereichs
- wenigstens eine Bauteilschicht (20) erwärmt wird;
- mindestens ein Bild der Bauteilschicht (20) mittels eines Kamerasystems (30) akquiriert wird, wobei das Bild eine Temperaturverteilung der Bauteilschicht (20) charakterisiert; und
- mittels einer Recheneinrichtung (32) anhand des mindestens einen akquirierten Bilds auf das Vorhandensein wenigstens eines oberflächennahen Fehlers (22) aus der Gruppe Risse, Bindefehler, Einschlüsse und andere Fehlstellen in der Bauteilschicht geprüft wird,
**dadurch gekennzeichnet, dass**
die wenigstens eine Bauteilschicht (20) durch Erzeugen von Wirbelströmen in der Bauteilschicht (20) erwärmt wird, indem wenigstens eine
Induktionsspule (26) mit elektrischem Strom beaufschlagt und relativ zur Bauteilschicht (20) bewegt wird, wobei die mittlere relative Geschwindigkeit zwischen der Induktionsspule und der Bauteilschicht zwischen 1 mm/s und 250 mm/s beträgt.

2. Verfahren nach Anspruch 1,
**dadurch gekennzeichnet, dass**
wenigstens eine weitere Induktionsspule mit elektrischem Strom beaufschlagt und relativ zur Bauteilschicht (20) und/oder relativ zur Induktionsspule (26) bewegt wird und/oder dass mittels der wenigstens einen Induktionsspule (26) der pulverförmige Werkstoff vor, während und/oder nach Schritt b) erwärmt wird.

3. Verfahren nach Anspruch 1 oder 2,
**dadurch gekennzeichnet, dass**
die wenigstens eine Bauteilschicht (20) erwärmt wird, indem ein gepulstes Hochfrequenzmagnetfeld für eine vorbestimmte Zeitdauer eingekoppelt wird.

4. Verfahren nach Anspruch 3,
**dadurch gekennzeichnet, dass**
eine Pulsdauer des Hochfrequenzmagnetfelds und/oder die vorbestimmte Zeitdauer zwischen 50 ms und 0,5 s beträgt und/oder dass das Hochfrequenzmagnetfeld mehrfach für eine jeweils vorbestimmte Zeitdauer eingekoppelt wird.

5. Verfahren nach Anspruch 3 oder 4,
**dadurch gekennzeichnet, dass**
das Hochfrequenzmagnetfeld mittels eines Hochfrequenz-Generators (28) erzeugt wird, wobei der Hochfrequenz-Generator (28) mit einer Frequenz zwischen 1 kHz und 1000 kHz und/oder mit einer Leistung von mindestens 0,1 kW betrieben wird.

6. Verfahren nach einem der Ansprüche 1 bis 5,
**dadurch gekennzeichnet, dass**
die wenigstens eine Bauteilschicht (20) während und/oder nach Schritt b) durch Erzeugen von Wirbelströmen erwärmt wird.

7. Verfahren nach einem der Ansprüche 1 bis 6,
**dadurch gekennzeichnet, dass**
die Recheneinrichtung (32) beim Prüfen auf Fehler (22) das wenigstens eine akquirierte Bild mit einem Referenzbild vergleicht und/oder anhand des akquirierten Bilds eine Bauteilschichtkontur ermittelt und/oder Randbereiche der Bauteilschicht (20) bei der Prüfung auf Fehler (22) berücksichtigt.

8. Verfahren nach einem der Ansprüche 1 bis 7,
**dadurch gekennzeichnet, dass**
nacheinander mehrere Bilder der erwärmten Bauteilschicht (20) mittels des Kamerasystems (30) akquiriert werden, wobei die Bilder eine zeitliche Entwicklung der Temperaturverteilung der Bauteilschicht (20) charakterisieren, und dass mittels der Recheneinrichtung (32) anhand der mehreren akquirierten Bilder auf das Vorhandensein und/oder auf die Beschaffenheit wenigstens eines Fehlers (22) geprüft wird.

9. Verfahren nach einem der Ansprüche 1 bis 8,
**dadurch gekennzeichnet, dass**
mittels der Recheneinrichtung (32) in Abhängigkeit der Prüfung auf Fehler (22) die Belichtungsstrategie für eine erneute Belichtung der Bauteilschicht (20) und/oder für wenigstens eine folgende Bauteilschicht bestimmt und/oder angepasst wird.

10. Schichtbauvorrichtung (10) zur additiven Herstellung zumindest eines Bauteilbereichs eines Bauteils durch ein additives Schichtbauverfahren, umfassend:
- mindestens eine Pulverzuführung (12) zum Auftrag von mindestens einer Pulverschicht (14) eines Werkstoffs auf eine Aufbau- und Fügezone (I) einer bewegbaren Bauplattform (16); und
- mindestens eine Strahlungsquelle zum Erzeugen wenigstens eines Hochenergiestrahls zum schichtweisen und lokalen Verschmelzen und/oder Versintern des Werkstoffs zum Ausbilden einer Bauteilschicht (20) durch selektives Belichten des Werkstoffs mit dem wenigstens einem Hochenergiestrahl gemäß einer vorbestimmten Belichtungsstrategie,
- mindestens eine Heizeinrichtung (24), welche dazu ausgebildet ist, wenigstens eine Bauteilschicht (20) zu erwärmen;
- ein Kamerasystem (30), welches dazu ausgebildet ist, mindestens ein Bild der erwärmten Bauteilschicht (20) zu akquirieren, wobei das Bild eine Temperaturverteilung der Bauteilschicht (20) charakterisiert; und
- mindestens eine Recheneinrichtung (32), welche dazu ausgebildet ist, anhand des akquirierten Bilds auf das Vorhandensein wenigstens eines oberflächennahen Fehlers (22) aus der Gruppe Risse, Bindefehler, Einschlüsse und andere Fehlstellen in der Bauteilschicht zu prüfen,
**dadurch gekennzeichnet, dass**
die wenigstens eine Bauteilschicht (20) durch Erzeugen von Wirbelströmen in der Bauteilschicht (20) erwärmbar ist, indem wenigstens eine
Induktionsspule (26) der Heizeinrichtung (24) mit elektrischem Strom beaufschlagbar und relativ zur Bauteilschicht (20) bewegbar ist, wobei die mittlere relative Geschwindigkeit zwischen der Induktionsspule und der Bauteilschicht zwischen 1 mm/s und 250 mm/s einstellbar ist.

11. Schichtbauvorrichtung (10) nach Anspruch 10,
**dadurch gekennzeichnet, dass**
diese eine generative Lasersinter- und/oder Laserschmelzeinrichtung (18) umfasst, mittels welcher die wenigstens eine Bauteilschicht (20) herstellbar ist.

12. Schichtbauvorrichtung (10) nach Anspruch 10 oder 11,
**dadurch gekennzeichnet, dass**
das Kamerasystem (30) eine Thermografiekamera umfasst, insbesondere eine Wärmebildkamera, welche zum Akquirieren von Bilder im Wellenlängenbereich von 0,5 µm bis 10 µm ausgebildet ist.

13. Schichtbauvorrichtung (10) nach einem der Ansprüche 10 bis 12,
**dadurch gekennzeichnet, dass**
diese eine Heizeinrichtung (24) mit wenigstens zwei unabhängig voneinander bewegbaren Induktionsspulen (26) umfasst.

14. Schichtbauvorrichtung (10) nach einem der Ansprüche 10 bis 13,
**dadurch gekennzeichnet, dass**
diese eine Speichereinrichtung umfasst, welche wenigstens ein Referenzbild umfasst,
welches zur Prüfung auf das Vorhandensein wenigstens eines Fehlers (22) mittels der Recheneinrichtung (32) mit dem wenigstens einen zu akquirierenden Bild zu vergleichen ist.

## Claims

1. A layer construction method for the additive manufacture of at least one component region of a component, comprising at least the following steps:
a) applying at least one powder layer (14) of a metallic and/or intermetallic material to at least one build-up and joining zone (I) of at least one lowerable construction platform (16);
b) layer-wise and local melting and/or sintering of the material to form a component layer (20) by selective exposure of the material with at least one high-energy beam in accordance with a predetermined exposure strategy;
c) layered lowering of the construction platform (16) by a predefined layer thickness; and
d) repeating steps a) through d) until completion of the component region, wherein during the manufacture of the component region
- at least one component layer (20) is heated;
- at least one image of the component layer (20) is acquired by means of a camera system (30), the image characterizing a temperature distribution of the component layer (20); and
- a check for the presence of at least one near-surface defect (22) from the group of cracks, binding defects, inclusions and other defects in the component layer being carried out by means of a computing device (32) on the basis of the at least one acquired image, **characterized in that** the at least one component layer (20) is heated by generating eddy currents in the component layer (20) by applying electrical current to at least one induction coil (26) and moving it relative to the component layer (20), the mean relative speed between the induction coil and the component layer being between 1 mm/s and 250 mm/s.

2. A method according to claim 1, **characterized in that** at least one further induction coil is supplied with electrical current and is moved relative to the component layer (20) and/or relative to the induction coil (26) and/or **in that** by means of the at least one induction coil (26), the powdery material is heated before, during and/or after step b).

3. The method according to either claim 1 or claim 2, **characterized in that** the at least one component layer (20) is heated by coupling in a pulsed high-frequency magnetic field for a predetermined period of time.

4. The method according to claim 3, **characterized in that** a pulse duration of the high-frequency magnetic field and/or the predetermined time period is between 50 ms and 0.5 s and/or **in that** the high-frequency magnetic field is coupled in multiple times for a respectively predetermined time period.

5. The method according to either claim 3 or claim 4, **characterized in that** the high-frequency magnetic field is generated by means of a high-frequency generator (28), the high-frequency generator (28) being operated at a frequency between 1 kHz and 1000 kHz and/or with a power of at least 0.1 kW.

6. The method according to any of claims 1 to 5, **characterized in that** the at least one component layer (20) is heated during and/or after step b) by generating eddy currents.

7. The method according to any of claims 1 to 6, **characterized in that** the computing device (32) compares the at least one acquired image with a reference image when checking for errors (22) and/or ascertains a component layer contour on the basis of the acquired image and/or takes edge regions of the component layer (20) into account during the check for errors (22).

8. The method according to any of claims 1 to 7, **characterized in that** a plurality of images of the heated component layer (20) are acquired in succession by means of the camera system (30), the images characterizing a temporal development of the temperature distribution of the component layer (20), and **in that** a check for the presence and/or of the nature of at least one error (22) is carried out by means of the computing device (32) on the basis of the plurality of acquired images.

9. The method according to any of claims 1 to 8, **characterized in that** the exposure strategy for a renewed exposure of the component layer (20) and/or for at least one subsequent component layer is determined and/or is adapted by means of the computing device (32) as a function of the check for errors (22).

10. A layer construction device (10) for the additive manufacture of at least one component region of a component by an additive layer construction method, comprising:
at least one powder feed (12) for applying at least one powder layer (14) of a material to a build-up and joining zone of a movable construction platform (16); and
at least one radiation source for generating at least one high-energy beam for layer-wise and local melting and/or sintering of the material to form a component layer (20) by selective exposure of the material to the at least one high-energy beam in accordance with a predetermined exposure strategy, at least one heating device (24) which is designed to heat at least one component layer (20);
a camera system (30), which is designed to acquire at least one image of the heated component layer (20), the image characterizing a temperature distribution of the component layer (20); and
at least one computing device (32), which is designed to use the acquired image for checking for the presence of at least one near-surface defect (22) from the group of cracks, binding defects, inclusions and other defects in the component layer, **characterized in that** the at least one component layer (20) may be heated by generating eddy currents in the component layer (20) by at least one induction coil (26) of the heating device (24) being subjectable to electrical current and being movable relative to the component layer (20), the mean relative speed between the induction coil and the component layer being adjustable between 1 mm/s and 250 mm/s.

11. The layer construction device (10) according to claim 10, **characterized in that** said device comprises a generative laser sintering and/or laser melting device (18), by means of which the at least one component layer (20) may be manufactured.

12. The layer construction device (10) according to either claim 10 or claim 11, **characterized in that** the camera system (30) comprises a thermography camera, in particular a thermal imaging camera, which is designed to acquire images in the wavelength range from 0.5 µm to 10 µm.

13. The layer construction device (10) according to any of claims 10 to 12, **characterized in that** said device comprises a heater (24) having at least two induction coils (26), which may be moved independently of one another.

14. The layer construction device (10) according to any of claims 10 to 13, **characterized in that** said device comprises a memory device, which comprises at least one reference image which is to be compared with the at least one image to be acquired to check for the presence of at least one error (22) by means of the computing device (32).

## Revendications

1. Procédé de fabrication en couche destiné à la fabrication additive d'au moins une zone de composant d'un composant, comprenant au moins les étapes suivantes :
a) application d'au moins une couche de poudre (14) d'un matériau métallique et/ou intermétallique sur au moins une zone de construction et de jonction (I) d'au moins une plate-forme de construction (16) abaissable ;
b) fusion et/ou frittage en couche et local(e) du matériau pour former une couche de composant (20) par l'exposition sélective du matériau à au moins un faisceau de haute énergie selon une stratégie d'exposition prédéfinie ;
c) abaissement en couche de la plate-forme de construction (16) d'une épaisseur de couche prédéfinie ; et
d) répétition des étapes a) à d) jusqu'à l'achèvement de la zone de composant, dans lequel, pendant la fabrication de la zone de composant,
- au moins une couche de composant (20) est chauffée ;
- au moins une image de la couche de composant (20) est acquise au moyen d'un système de caméra (30), l'image caractérisant une répartition de la température de la couche de composant (20) ; et
- la présence d'au moins un défaut (22) proche de la surface du groupe comprenant les fissures, les défauts de liaison, les inclusions et autres défauts dans la couche de composant est vérifiée au moyen d'un dispositif de calcul (32) sur la base de l'au moins une image acquise, **caractérisé en ce que** l'au moins une couche de composant (20) est chauffée par la production de courants de Foucault dans la couche de composant (20) par l'application d'un courant électrique à au moins une bobine d'induction (26) et par le déplacement de ladite bobine d'induction par rapport à la couche de composant (20), la vitesse relative moyenne entre la bobine d'induction et la couche de composant étant comprise entre 1 et 250 mm/s.

2. Procédé selon la revendication 1, **caractérisé en ce qu'**au moins une autre bobine d'induction est alimentée en courant électrique et est déplacée par rapport à la couche de composant (20) et/ou par rapport à la bobine d'induction (26), et/ou **en ce que** le matériau pulvérulent est chauffé au moyen de l'au moins une bobine d'induction (26) avant, pendant et/ou après l'étape b).

3. Procédé selon la revendication 1 ou 2, **caractérisé en ce que** l'au moins une couche de composant (20) est chauffée par couplage d'un champ magnétique à haute fréquence pulsé pendant une durée prédéfinie.

4. Procédé selon la revendication 3, **caractérisé en ce qu'**une durée d'impulsion du champ magnétique à haute fréquence et/ou la durée prédéfinie est comprise entre 50 ms et 0,5 s, et/ou **en ce que** le champ magnétique à haute fréquence est couplé plusieurs fois pendant une durée respectivement prédéfinie.

5. Procédé selon la revendication 3 ou 4, **caractérisé en ce que** le champ magnétique à haute fréquence est généré au moyen d'un générateur haute fréquence (28), le générateur haute fréquence (28) fonctionnant à une fréquence comprise entre 1 et 1 000 kHz et/ou à une puissance d'au moins 0,1 kW.

6. Procédé selon l'une des revendications 1 à 5, **caractérisé en ce que** l'au moins une couche de composant (20) est chauffée pendant et/ou après l'étape b) par la production de courants de Foucault.

7. Procédé selon l'une des revendications 1 à 6, **caractérisé en ce que** le dispositif de calcul (32) compare l'au moins une image acquise avec une image de référence lors du contrôle des défauts (22) et/ou détermine un contour de couche de composant sur la base de l'image acquise et/ou prend en compte les zones de bord de la couche de composant (20) lors du contrôle des défauts (22).

8. Procédé selon l'une des revendications 1 à 7, **caractérisé en ce que** plusieurs images de la couche de composant (20) chauffée sont acquises successivement au moyen du système de caméra (30), les images caractérisant un développement temporel de la répartition de la température de la couche de composant (20), et **en ce que** la présence et/ou la nature d'au moins un défaut (22) est vérifiée au moyen du dispositif de calcul (32) sur la base des multiples images acquises.

9. Procédé selon l'une des revendications 1 à 8, **caractérisé en ce que** la stratégie d'exposition pour une nouvelle exposition de la couche de composant (20) et/ou pour au moins une couche de composant suivante est déterminée et/ou adaptée au moyen du dispositif de calcul (32) en fonction du contrôle des défauts (22).

10. Dispositif de fabrication en couche (10) destiné à la fabrication additive d'au moins une zone de composant d'un composant par un procédé de fabrication en couche additive, comprenant :
au moins un dispositif d'alimentation en poudre (12) destiné à appliquer au moins une couche de poudre (14) d'un matériau sur une zone de construction et de jonction (I) d'une plate-forme de construction (16) déplaçable ; et
au moins une source de rayonnement destiné à générer au moins un faisceau de haute énergie pour la fusion et/ou le frittage en couche et local(e) du matériau afin de former une couche de composant (20) par l'exposition sélective du matériau à l'au moins un faisceau de haute énergie selon une stratégie d'exposition prédéfinie, au moins un dispositif de chauffage (24) conçu pour chauffer au moins une couche de composant (20) ;
un système de caméra (30) conçu pour acquérir au moins une image de la couche de composant (20) chauffée, l'image caractérisant une répartition de la température de la couche de composant (20) ; et
au moins un dispositif de calcul (32) conçu pour vérifier la présence d'au moins un défaut (22) proche de la surface du groupe comprenant les fissures, les défauts de liaison, les inclusions et autres défauts dans la couche de composant sur la base de l'image acquise, **caractérisé en ce qu'**au moins une couche de composant (20) peut être chauffée par la production de courants de Foucault dans la couche de composant (20), **en ce qu'**au moins une bobine d'induction (26) du dispositif de chauffage (24) peut être alimentée en courant électrique et peut être déplacée par rapport à la couche de composants (20), la vitesse relative moyenne entre la bobine d'induction et la couche de composant étant réglable entre 1 et 250 mm/s.

11. Dispositif de fabrication en couche (10) selon la revendication 10, **caractérisé en ce qu'**il comprend un dispositif de frittage et/ou de fusion laser génératif (18), au moyen duquel l'au moins une couche de composant (20) peut être fabriquée.

12. Dispositif de fabrication en couche (10) selon la revendication 10 ou 11, **caractérisé en ce que** le système de caméra (30) comprend une caméra thermographique, en particulier une caméra thermique, laquelle est conçue pour acquérir des images dans la gamme de longueurs d'onde de 0,5 à 10 µm.

13. Dispositif de fabrication en couche (10) selon l'une des revendications 10 à 12, **caractérisé en ce qu'**il comprend un dispositif de chauffage (24) comportant au moins deux bobines d'induction (26) qui peuvent être déplacées indépendamment l'une de l'autre.

14. Dispositif de fabrication en couche (10) selon l'une des revendications 10 à 13, **caractérisé en ce qu'**il comprend un dispositif de mémoire comprenant au moins une image de référence qui, pour vérifier la présence d'au moins un défaut (22), doit être comparée avec l'au moins une image à acquérir au moyen du dispositif de calcul (32).
